# EUROPÄISCHE PATENTANMELDUNG

(11) **EP 4 640 352 A1**
(43) Veröffentlichungstag der Anmeldung: **29.10.2025**
(21) Anmeldenummer: 24172409.5
(22) Anmeldetag: 25.04.2024
(51) Int. Cl.: B23D 79/02, B23B 51/10

(54) **DREHANTREIBBARES WERKZEUG ZUM GLEICHZEITIGEN ENTGRATEN EINER KANTE AN EINER OBER- UND UNTERSEITE EINES WERKSTÜCKS**

(71) Anmelder: Gühring KG, 72458 Albstadt (DE)
(72) Erfinder: v. Puttkamer, Ingo, 72458 Albstadt (DE)
(74) Vertreter: Winter, Brandl - Partnerschaft mbB

(57) **Zusammenfassung**

Drehantreibbares Werkzeug 10 zum gleichzeitigen Entgraten einer Kante 101 an einer Oberseite und einer Unterseite eines Werkstücks 100 umfassend einen Werkzeugkörper 1, wobei der Werkzeugkörper 1 einen Einspannabschnitt 2 an einem Ende und einem Werkzeugkopf 3 an einem gegenüberliegenden Ende aufweist, wobei um den Werkzeugkopf 3 eine erste Haltebuchse 41 und eine zweite Haltebuchse 42 angeordnet sind, welche sich entlang einer Rotationsachse R des Werkzeugkörpers 1 erstrecken und zumindest je eine flexibles Faserelement 5 aufweisen, wobei die Faserelemente 5 der ersten und der zweiten Haltebuchse 41, 42 mit einem ersten Ende in der Haltebuchse 41, 42 angeordnet sind und mit je einem zweiten, freien Ende 51 derart zueinander angeordnet sind, sodass diese bei Rotation des Werkzeugs 5 aufgrund der Fliehkraft nach außen gebogen werden um ein Werkstück gleichzeitig an der Oberseite und Unterseite zu bearbeiten.

## Beschreibung

Die Erfindung betrifft ein drehantreibbares Werkzeug zum gleichzeitigen Entgraten einer Kante an einer Ober- und Unterseite eines Werkstücks.

Das Entgraten beschreibt das Entfernen von Graten, also von scharfen Kanten, Absplitterungen oder Auffaserungen von Werkstücken und stellt einen weitverbreiteten Schritt in der Nachbearbeitung von Metallen, vor allem von Bohrungseintritten, Bohrungsaustritten und Querbohrungsaustritten, dar. Gerade bei Schmierstoffkanälen, Rotationsgehäusen, Bremszylindern und ähnlichem ist präzises Entgraten entscheidend für die Entfaltung des vollen Leistungspotentials.

Als Entgratwerkzeuge agieren dabei üblicherweise Werkzeuge mit einem konischen Werkzeugkopf mit mehreren Schneiden, welcher in Rotation versetzt und an das zu entgratende Werkstück angelegt wird. Der Einsatz eines solchen Entgratwerkzeugs eignet sich vorranging bei der Entgratung von runden Bohrungen.

Eine alternative Ausführungsform eines Entgratwerkzeugs ist in der DE 10 2017 115 540 A1 offenbart. Dieses Entgratwerkzeug ist zur Entgratung einer Durchgangsbohrung geeignet und umfasst einen Werkzeugkopf mit einer Führungshülse, in welcher eine flexible Faser fixiert ist. Das Entgratungswerkzeug wird von der der zu entgratenden Öffnungsoberfläche gegenüberliegenden Seite durch die Durchgangsbohrung eingeführt, sodass die Faser teilweise aus der Durchgangsbohrung übersteht. Durch Rotieren des Entgratwerkzeugs strebt die Faser durch die Fliehkraft bevorzugt im 90 ° Winkel bezüglich der Führungshülse weg. Durch Herausziehen des rotierenden Entgratwerkzeugs kommt die Faser mit der zu entgratenden Öffnungsoberfläche in Kontakt, wodurch diese entgratet wirkt. Dieses Entgratwerkzeug hat den Vorteil Bohrung mit unterschiedlichen Durchmessern entgraten und verschiedene Senkwinkel erzielen zu können.

Beim Einsatz an Außenkannten, beispielsweise von Platten, zeigt sich jedoch ein Nachteil der aus dem Stand der Technik bekannten Entgratwerkzeuge. Dabei ist es oft der Fall, dass nicht nur eine Kante entgratet werden muss, sondern auch die Kante auf der Rückseite. Bei der Verwendung eines Entgratwerkzeugs wie eben beschrieben, muss jede Kante einzeln entgratet werden. Eine zeitgleiche Entgratung von Kanten an Ober- und Unterseite eines Werkstücks ist somit nicht möglich, was die Nachbearbeitung zeitintensiv gestaltet.

Es ist daher die Aufgabe der Erfindung die Nachteile im Stand der Technik zu überwinden und insbesondere ein Werkzeug zum gleichzeitigen Entgraten einer Kante an einer Ober- und Unterseite eines Werkstücks bereitzustellen.

Diese Aufgabe wird durch eine Werkzeug gemäß dem unabhängigen Anspruch gelöst. Vorteilhafte Ausgestaltungen bilden den Gegenstand der jeweiligen abhängigen Ansprüche.

Die Erfindung umfasst ein drehantreibbares Werkzeug zum gleichzeitigen Entgraten einer Kante an einer Oberseite und einer Unterseite eines Werkstücks. Das Werkzeug umfasst einen Werkzeugkörper. Dieser weist einen Einspannabschnitt an einem Ende und eine Werkzeugkopf an einem gegenüberliegenden Ende auf. Um den Werkzeugkopf sind eine erste Haltebuchse und eine zweite Haltebuchse angeordnet, welche sich entlang einer Rotationsachse des Werkzeugkörpers erstrecken und zumindest je ein flexibles Faserelement aufweisen. Diese Faserelemente sind mit einem ersten Ende in der Haltebuchse angeordnet und mit je einem zweiten, freien Ende derart zueinander angeordnet, sodass diese bei Rotation des Werkzeug aufgrund der Fliehkraft nach außen gebogen werden um ein Werkstück gleichzeitig an einer Oberseite und Unterseite zu bearbeiten, was also das gleichzeitigen Entgraten einer Kante an einer Ober- und Unterseite eines Werkstücks ermöglicht. Somit muss nicht jede Kante einzeln entgratet werden, wodurch die Nachbearbeitung weniger Zeit beansprucht.

Gemäß einer technisch vorteilhaften Ausführung sind die Faserelemente derart flexibel, sodass sich bei Rotation des Werkzeugs der Abstand in axialer Richtung zwischen den freien Enden von Faserelementen der ersten und der zweiten Haltebuchse verringert. Das Werkstück, das sich während der Entgratung zwischen den Faserelemententen erster und zweiter Haltebuchse aufhält, wird so von beiden Seiten von den freien Enden angegriffen und entgratet.

Bevorzugt umfasst das Werkzeug ferner eine erste Führungshülse und eine zweite Führungshülse, wobei die erste Führungshülse um die erste Haltebuchse und die zweite Führungshülse um die zweite Haltebuchse derart angeordnet ist, sodass die Faserelemente lösbar oder unlösbar an einem Fixierungspunkt fixiert und innerhalb der Führungshülse parallel zur Rotationsachse geführt sind und jenseits der Führungshülse reichen. Der Fixierpunkt wird dabei zum Beispiel durch eine Verdickung an der Innenseite der Führungshülse oder eine Einprägung realisiert.

Vorteilhafterweise weisen die Faserelemente eine freie Länge auf, welche die Länge zwischen Fixierungspunkt und freiem Ende der Faser beschreibt. Die freie Länge ist derart ausgebildet, dass sich die Faserelemente in einem Kreuzungspunkt kreuzen, wobei sich der Kreuzungspunkt auf 20 % bis 80 % der freien Länge befindet. Dabei ist die Kreuzung der Faserelemente entscheidend um die Entgratung an Ober- und Unterseite des Werkstücks zu ermöglichen.

Gemäß eines bevorzugten Aspekts haben alle Faserelemente die gleiche freie Länge, oder zumindest alle Faserelemente der ersten Buchse und alle Faserelemente der zweiten Buchse haben die gleiche freie Länge. Bei selber Länge und gleicher sonstiger Beschaffenheit der Faserelemente reagieren alle Faserelemente gleichartig auf die Fliehkraft während der Rotation, wodurch auch die Entgratwirkung aller Faserelemente auf das Werkstück gleich stark ausgebildet ist.

Gemäß eines Vorteils sind die obere und unteren Führungshülse derart axial verschiebbar angeordnet, sodass die Lage des Fixierungspunktes und die freie Länge variierbar ist. Somit kann das Werkzeug an die Ausmaße des Werkstücks, vor allem dem Abstand der Ober- und Unterseite, angepasst werden, indem der Kreuzungspunkt und der Abstand der freien Enden variiert wird.

Technisch bevorzugt ist, dass sich die Führungshülsen entlang der Faserelementen in ihrem Durchmesser weiten. Dadurch wird den Faserelementen bei Rotation Raum für die Biegung nach außen gewährt. Dabei drückt sich die Kante der Führungshülse sich nicht zu sehr in die Faserelemente ein und diese werden nicht zu stark geknickt.

Vorteilhafterweise sind die erste und zweite Buchse drehfest an dem Werkzeugkopf befestigt, insbesondere geklebt. Somit wird eine Rotation des Werkzeugkörpers zuverlässig auf die Faserelemente übertragen. Eine erhöhte Haftung wird durch gerändelte Abschnitte am Werkzeugkopf erreicht, an welche die Haltebuchsen mit den Faserelementen befestigt werden.

Bevorzugt weisen die oberen und die unteren Buchsen gleich viele Faserelemente auf. Bei mittiger Ausrichtung des Werkstücks bezüglich des Kreuzungspunkts und den freien Enden der entsprechend ausgebildeten Faserelemente werden so Ober- und Unterseite gleich intensiv bearbeitet.

Gemäß eines technischen Vorteils weist die erste und die zweite Buchse je mindestens zwei Faserelemente auf, welche rotationssymmetrisch um die Rotationsachse angeordnet sind. Durch rotationssymmetrische Anordnung entsteht keine Unwucht der Haltebuchsen mit den Faserelementen.

Bevorzugt sind die Faserelemente aus Kunststofffasern, Glasfasern, Metallfasern, Keramikfasern und / oder Kohlenstoffasern gefertigt. Die Faserelemente können dabei in Abschnitte verschiedener Materialien unterteilt sein, wobei diese Abschnitte über die Länge oder über den Querschnitt verteilt sein können.

Vorteilhafterweise weisen die Faserelemente eine abrasive Faseroberfläche durch Besetzung mit einem Diamantenmaterial auf. Die Besetzung mit dem Material führt zu einer harten Strukturierung, wodurch die entgratende Wirkung der Faserelemente bei Kontakt mit dem Werkstück erhöht wird.

Ein weiterer Aspekt der Erfindung umfasst ein Verfahren zum Entgraten mit einem drehantreibbaren Werkzeug mit oben erörterten Merkmalen umfassend der Schritte Rotieren des Entgratungswerkzeugs auf Nenndrehzahl und Annähern des Werkstücks Richtung an das Werkzeug. Durch das Rotieren streben die Faserelemente durch die Fliehkraft bevorzugt im Wesentlichen rechtwinklig bezüglich der Führungshülsen weg. Annähern des Werkstücks erfolgt in radiale Richtung an das Werkzeug, wobei das Werkstück sich auf einer Ebene senkrecht zur Rotationsachse zwischen den Führungshülsen befindet und mit den zu entgratenden Kanten derart zum Werkzeug gerichtet ist, sodass die zu bearbeitenden Kanten auf der Ober- und Unterseite des Werkstücks angeordnet sind. So wird eine Entgratungsbearbeitung an den Kanten bewirkt, wobei der Entgratungswinkel von der Geschwindigkeit des Werkzeugs und der Annäherung des Werkstücks abhängt. Bei Anordnung des Werkstücks auf Ebene des Kreuzungspunktes können so beide Kanten gleichzeitig gleichmäßig entgratet werden.

Bevorzugt ist die Nenndrehzahl derart gewählt, sodass sich Faserelemente nach außen bewegen und kreuzen. Bei zu hoher Drehzahl kann die Fliehkraft die Faserelement zu weit nach außen tragen, sodass sie sich nicht mehr kreuzen. Dann ist eine Bearbeitung des Werkstücks nicht mehr möglich, da die freien Enden dann von dem Werkstück wegbewegt werden und keine Kraft mehr auf die Kanten wirkt.

Vorteilhafterweise kann die Nenndrehzahl entsprechend des Abstands der Ober- und Unterseite des Werkstücks gewählt werden. Der Abstand der freien Enden kann bei einem schmalen Werkstück so beispielsweise durch Erhöhen der Nenndrehzahl verringert und so den Maßen des Werkstücks angepasst werden.

Gemäß eines technischen Vorteils umfasst das Verfahren ferner den Schritt eines stufenweisen Erhöhen der Nenndrehzahl. So kann die Bearbeitung des Werkstücks mit niedrigerer Drehzahl, also kleinerer Wirkung auf das Werkstück beginnen. Ist die Kante schon oberflächlich entgratet, kann die Drehzahl erhöht werden, wobei die Faserelement dann weiter und stärker gegen die zu entgratenden Kanten gedrückt werden.

Bevorzugt umfasst das Verfahren zudem den Schritt eines stufenweisen Annähern der Führungshülsen zueinander. Ähnlich wie beim Erhöhen der Nenndrehzahl kann so während dem Prozess die Wirkung der Faserelemente auf das Werkstück erhöht werden.

Im Folgenden wird die Erfindung anhand eines in der beigefügten Zeichnung dargestellten Beispiels näher erläutert.

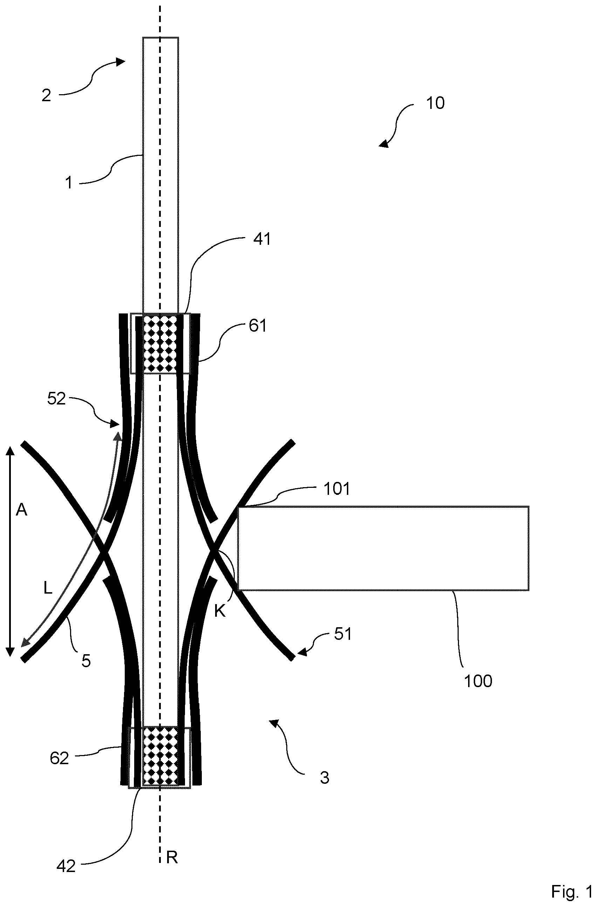

Es zeigt
Fig. 1 schematische Darstellung eines erfindungsgemäßen Werkzeugs zum Entgraten.

In **Fig. 1** ist ein erfindungsgemäßes Werkzeug 10 zum Entgraten einer Kante 101 an einer Oberseite und einer Unterseite eines Werkstücks 100 dargestellt. Das Werkzeug 10 umfasst einen Werkzeugkörper 1, an dessen in dieser Darstellung oberen Ende sich ein Einspannabschnitt 2 befindet. Am gegenüberliegenden Ende am Werkzeugkopf 3 ist eine erste Haltebuchse 41 und eine zweite Haltebuchse 42 angeordnet. Diese erstrecken sich entlang der Rotationsachse R des Werkzeugkörpers 1. Dabei ist in dieser beispielhaften Ausführung die zweite Haltebuchse 42 direkt am Ende des Werkzeugkopfes 3 angeordnet, die erste Haltebuchse 41 ist näher an der Mitte des Werkzeugkörpers 1. Die Haltebuchsen 41, 42 weisen in dieser Darstellung gleich viele, nämlich jeweils zwei, sich gegenüberliegende Faserelemente 5 auf. Diese Anordnung ist rotationssymmetrisch. Die Faserelemente 5 sind mit einem ersten Ende an der Haltebuchse 41, 42 fixiert. Die Anordnung der Haltebuchsen 41, 42 und der Faserelementen 5 an dem Werkzeugkörper 1 in diesem Ausführungsbeispiel erfolgte durch Rädelung der Abschnitte des Werkzeugkörpers 1, an welchen die Haltebuchsen 41, 42 angeordnet sind. Auf die durch die Rädelung aufgerauten Abschnitte sind die Faserelemente 5 aufgelegt. Dann werden die Haltebuchsen 41, 42 auf den Abschnitt aufgesetzt und aufgeklebt. Das zweite Ende der Faserelemente 5 ist ein freies Ende 51, wobei die Faserelemente 5 der erste Haltebuchse 41 in dieser Darstellung nach unten in Richtung der zweiten Haltebuchse 42 und die Faserelemente 5 der zweiten Haltebuchse 42 nach oben in Richtung der ersten Haltebuchse 41 verlaufen. Die Darstellung zeigt außerdem, wie die freien Enden 51 der Faserelemente 5 bei Rotation durch die Fliehkraft nach außen gebogen werden, wodurch sich der Abstand A in axialer Richtung zwischen den freien Enden 51 von Faserelementen 5 von der ersten Haltebuchse 41 und der zweiten Haltebuchse 42 verringert.

An dem Einspannabschnitt 2 kann das Werkzeugkörper 1 in ein Drehlager eingespannt werden und von diesem in Rotation versetzt werden. Durch die drehfeste Anordnung der Faserelemente 5 an dem Werkzeugkörper 1 kann ein Werkstück 100 an Oberkante und Unterkante 101 gleichzeitig bearbeitet werden. Wird das Werkstück 100 dem Werkzeug 10 entsprechend der Darstellung angenähert. So führt die Abstandsverringerung der freien Enden 51 bei Rotation des Werkezugs 10 dazu, dass die Faserelemente 5 gegen die Kanten 101 des Werkstückes 100 stoßen. Indem an erster und zweiter Haltebüchse 41, 42 gleich viele Faserelemente 5 angeordnet sind, ist die Bearbeitung der Kanten 101 gleichmäßiger. Durch die rotationssymmetrische Anordnung der Faserelemente 5 hat das Werkzeug keine Unwucht. Die Bearbeitung des Werkstücks 100 erfolgt bei einer Nenndrehzahl, welche entsprechend der Beschaffenheit des Werkstücks 100 gewählt wird. Diese kann auch während des Bearbeitungsprozesses variiert werden.

Um die erste Haltebuchse 41 ist zudem eine erste Führungshülse 61 und um die zweite Haltebuchse 42 eine zweite Führungshülse 62 angeordnet. Diese verlaufen entlang der Faserelemente 5, sind jedoch kürzer als diese und fixieren sie an einem Fixierungspunkt F lösbar oder unlösbar gegen den Werkzeugkörper 1. In der dargestellten Ausführung erfolgt diese Fixierung durch eine Einprägung beziehungsweise Verbiegung der Führungshülsen 61, 62 gegen den Werkzeugkörper 1 auf Höhe des Fixierungspunktes F. Dadurch verlaufen die Faserelemente 5 bis zu dem Fixierungspunkt F parallel zur Rotationsachse R. Ab dem Fixierungspunkt F weiten sich die Führungshülse 61, 62 in ihrem Durchmesser. Der Fixierungspunkt F beschränkt außerdem die freie Länge L der Faserelement 5, also die Länge zwischen dem Fixierungspunkt F und dem freien Ende 51 und somit den Abschnitt des Faserelements 5, welcher bei Rotation gebogen werden kann. Diese freie Länge L ist derart ausgebildet, dass sich die Faserelemente 5 der ersten Haltebuchse 41 und der zweiten Haltebuchse 42 bei Biegung durch die Fliehkraft in einem Kreuzungspunkt K kreuzen. Der Kreuzungspunkt K befindet sich auf 20% bis 80% der freien Länge L. Dabei ist die Lage des Fixierungspunktes F und somit die freie Länge L durch axiales Verschieben der Führungshülsen 61, 62 variierbar. In der dargestellten Ausführung haben dabei alle Faserelemente 5 die gleiche freie Länge L.

Der aufgeweitete Durchmesser der Führungshülsen 61, 62 ermöglicht es den Faserelementen 5 sich innerhalb der Führungshülsen 61, 62 nach außen zu biegen. Je nach Stärke der Fliehkraft liegen die Faserelemente 5 dann von innen an den Führungshülsen 61, 62 an, wodurch die Biegung begrenzt ist. Jenseits der Führungshülse 61, 62 ist die Biegung möglicherweise stärker. Angenommen die Führungshülse würde im Fixierungspunkt F enden, so würde die Biegung nicht geführt werden, sondern abrupt am Fixierungspunkt F beginnen und so zu einem Knicken der Faserelemente 5 führen. Somit schützt der aufgeweitete Durchmesser der Führungshülsen 61, 62 vor erhöhtem Verschleiß der Faserelemente 5. Die Verschiebung der Führungshülsen 61, 62 und somit der Variation der freien Länge 51 folgt ebenso zu einem Verschieben des Kreuzungspunktes K und einer Änderung des Abstands A der freien Ende 51. Somit kann das Werkzeug 10 an die Dimensionen des Werkstücks 100 angepasst werden. Ebenso können die Führungshülse 61, 62 während der Bearbeitung verschoben werden um die Entgratwirkung der Faserelemente 5 während des Prozesses zu variieren.

Die Faserelemente 5 bestehen aus Kunststofffasern, Glasfasern, Metallfasern, Keramikfasern und / oder Kohlenstoffasern und sind mit Diamantenmaterial besetzt, was zu einer abrasiven Faseroberfläche führt.

## Patentansprüche

1. Drehantreibbares Werkzeug (10) zum gleichzeitigen Entgraten einer Kante (101) an einer Oberseite und einer Unterseite eines Werkstücks (100) umfassend einen Werkzeugkörper (1), wobei der Werkzeugkörper (1) einen Einspannabschnitt (2) an einem Ende und einem Werkzeugkopf (3) an einem gegenüberliegenden Ende aufweist, wobei um den Werkzeugkopf (3) eine erste Haltebuchse (41) und eine zweite Haltebuchse (42) angeordnet sind, welche sich entlang einer Rotationsachse (R) des Werkzeugkörpers (1) erstrecken und zumindest je eine flexibles Faserelement (5) aufweisen, wobei die Faserelemente (5) der ersten und der zweiten Haltebuchse (41, 42) mit einem ersten Ende in der Haltebuchse (41, 42) angeordnet sind und mit je einem zweiten, freien Ende (51) derart zueinander angeordnet sind, sodass diese bei Rotation des Werkzeugs (5) aufgrund der Fliehkraft nach außen gebogen werden um ein Werkstück gleichzeitig an der Oberseite und Unterseite zu bearbeiten.

2. Werkzeug nach Anspruch 1, wobei die Faserelemente (5) derart flexibel sind, sodass sich bei Rotation des Werkzeugs (10) der Abstand (A) in axialer Richtung zwischen den freien Enden (51) von Faserelementen (5) der ersten und der zweiten Haltebuchse (41, 42) verringert.

3. Werkzeug (10) nach einem der Ansprüche 1 oder 2 ferner umfassend einer ersten Führungshülse (61) und einer zweiten Führungshülse (62), wobei die erste Führungshülse (61) um die erste Haltebuchse (41) und die zweite Führungshülse (62) um die zweite Haltebuchse (42) derart angeordnet ist, sodass die Faserelemente (5) lösbar oder unlösbar an einem Fixierungspunkt (F) fixiert und innerhalb der Führungshülse (61, 62) parallel zur Rotationsachse (R) geführt sind und jenseits der Führungshülse (61, 62) reichen.

4. Werkzeug (10) nach Anspruch 3, wobei die Faserelemente (5) eine freie Länge (L) aufweisen, welche die Länge zwischen Fixierungspunkt (F) und freiem Ende (51) der Faserelemente (5) beschreibt, wobei die freie Länge (L) derart ausgebildet ist, dass sich die Faserelemente (5) in einem Kreuzungspunkt (K) kreuzen, wobei sich der Kreuzungspunkt (K) auf 20 % bis 80 % der freien Länge (L) befindet.

5. Werkzeug (10) nach Anspruch 4, wobei die obere und unteren Führungshülse (61, 62) derart axial verschiebbar angeordnet sind, sodass die Lage des Fixierungspunktes (F) und die freie Länge (L) variierbar ist.

6. Werkzeug (10) nach einem der Ansprüche 4 oder 5, wobei alle Faserelemente (5) die gleiche freie Länge (L) aufweisen, oder zumindest alle Faserelemente (5) der ersten Buchse (41) und alle Faserelemente (5) der zweiten Buchse (42) die gleiche freie Länge (L) aufweisen.

7. Werkzeug (10) nach einem der Ansprüche 3 bis 6, wobei sich die Führungshülsen (61, 62) entlang der Faserelementen (5) in ihrem Durchmesser weiten.

8. Werkzeug (10) nach einem der vorhergehenden Ansprüche, wobei die erste und zweite Buchse (41, 42) drehfest an dem Werkzeugkopf (3) befestigt, insbesondere geklebt, sind.

9. Werkzeug (10) nach einem der vorhergehenden Ansprüche, wobei die oberen und die unteren Buchse (41, 42) gleich viele Faserelemente (5) aufweisen.

10. Werkzeug (10) nach einem der vorhergehenden Ansprüche, wobei die erste und die zweite Buchse (41, 42) je mindestens zwei Faserelemente (5) aufweisen, welche rotationssymmetrisch um die Rotationsachse (R) angeordnet sind.

11. Werkzeug (10) nach einem der vorhergehenden Ansprüche, wobei die Faserelemente (5) aus Kunststofffasern, Glasfasern, Metallfasern, Keramikfasern und / oder Kohlenstoffasern gefertigt sind.

12. Werkzeug (10) nach einem der vorhergehenden Ansprüche, wobei die Faserelemente (5) eine abrasive Faseroberfläche durch Besetzung mit einem Diamantenmaterial aufweist.

13. Verfahren zum Entgraten mit einem drehantreibbaren Werkzeug (10) nach einem der vorhergehenden Ansprüche umfassend folgender Schritte:
- Rotieren des Entgratungswerkzeugs (10) auf Nenndrehzahl, wobei die Faserelemente (5) durch die Fliehkraft bevorzugt im Wesentlichen rechtwinklig bezüglich der Führungshülsen (61, 62) wegstreben, und
- Annähern des Werkstücks (100) in radiale Richtung an das Werkzeug (10), wobei das Werkstück (100) sich auf einer Ebene senkrecht zur Rotationsachse (R) zwischen den Führungshülsen (61, 62) befindet und mit den zu entgratenden Kanten (101) derart zum Werkzeug (10) gerichtet ist, sodass die Kanten (101) auf der Ober- und Unterseite des Werkstücks (100) angeordnet sind, sodass eine Entgratungsbearbeitung an den Kanten (101) bewirkt wird, wobei der Entgratungswinkel von der Geschwindigkeit des Werkzeugs (10) und der Annäherung des Werkstücks (100) abhängt.

14. Verfahren zum Entgraten nach Anspruch 13, wobei die Nenndrehzahl derart gewählt ist, sodass sich Faserelemente (5) nach außen bewegen und kreuzen.

15. Verfahren zum Entgraten nach einem der Ansprüche 13 oder 14 wobei die Nenndrehzahl entsprechend des Abstands der Ober- und Unterseite des Werkstücks (100) gewählt ist.

16. Verfahren zum Entgraten nach einem der Ansprüche 13 bis 15 ferner umfassend den Schritt eines stufenweisen Erhöhen der Nenndrehzahl.

17. Verfahren zum Entgraten nach einem der Ansprüche 13 bis 15 ferner umfassend den Schritt eines stufenweisen Annähern der Führungshülsen (61, 62) zueinander.
